# EUROPEAN PATENT APPLICATION

(11) **EP 4 787 312 A1**
(43) Date of publication of application: **05.08.2026**
(21) Application number: 25305163.5
(22) Date of filing: 04.02.2025
(51) Int. Cl.: G06T 7/60

(54) **A METHOD FOR MEASURING AN ANATOMICAL TARGET IN MEDICAL IMAGES**

(71) Applicant: Dassault Systèmes, 78140 Vélizy-Villacoublay (FR)
(72) Inventor: Ndoko, Arthur, 78140 Vélizy-Villacoublay (FR); Deloges, Jean-Baptiste, 78140 Vélizy-Villacoublay (FR)
(74) Representative: Bandpay & Greuter

(57) **Abstract**

The disclosure notably relates to a computer-implemented method for measuring an anatomical target from a set of medical images representing the anatomical target. The method comprises: obtaining at least one medical image of the anatomical target; obtaining an annotation associated with the obtained at least one medical image of the anatomical target, the annotation comprising a measurement of the anatomical target. The method further comprises obtaining a trained model configured for outputting, based on the obtained annotation, a segmentation mask of the anatomical target represented on the obtained at least one medical image. The method comprises applying the obtained trained model to the obtained at least one medical image and the obtained annotation. Thereby, the method identifies a segmentation mask of the anatomical target represented on the obtained at least one medical image. The method comprises computing a measurement of the anatomical target on the identified segmentation mask.

## Description

### TECHNICAL FIELD

The disclosure relates to the field of computer programs and systems, and more specifically to a method, system and program for measuring an anatomical target from a set of medical images representing the anatomical target.

### BACKGROUND

Several widely used medical imaging techniques and scanning technologies such as Computed Tomography Scan (CT-scan), Magnetic Resonance Imaging (MRI) and Positron Emission Tomography (PET) provide 3D acquisitions of the anatomical target of a patient. The output of these medical imaging exams are usually vertical stacks of 2D image slices that represent the patient's anatomical target.

The use of a set of medical images to cover the same area of a patient is nowadays very common in medical applications to observe certain types of structures on the anatomical target of a same patient. In that case, the medical imaging examination may comprise annotations and segmentations of a set of medical images.

An annotation of a medical image refers to any type of spatial indication manually or automatically added to describe, enrich or analyze the medical image. Examples of annotations may comprise measurements of elements of the images and any type of indications of a region of interest (boxes, arrows) with associated labels. The annotation of a medical image may help in identifying and categorizing different parts of the anatomical target, such as marking a region as a tumor or labeling a region of interest as showing a specific condition. For instance, annotations may mark the location and size of a tumor in a medical image obtained by an MRI scan or labeling a bone fracture in a medical image obtained by an X-ray scan.

The process of annotating medical images is useful for medical analysis, medical research, and machine learning applications. For example, dataset containing annotations of medical images may be used for training machine learning models to identify and/or analyze specific medical conditions, to assist in diagnosis and to plan clinical treatments.

A segmentation of a medical image refers to partitions or segments of an area of interest of a medical image. A segmentation may be a type of annotation. A segmentation may also exploit an annotation previously performed in an area of interest of a medical image.

The process of segmenting a medical image may comprise partitioning the medical image into multiple segments to isolate and analyze specific regions or structures of interest within the image. The segmentation of a medical image may provide a detailed and precise outline of structures, such as (automatic and/or semi-automatic) measurements of organs, tumors, or lesions, at the pixel level.

The task of annotation and the task of segmentation of medical images are time-consuming processes. In average, it takes around 10 minutes to an expert in medical imaging to annotate and segment a single tumor lesion in a 3D medical image. Moreover, the results depend on the experience and expertise of the medical operator (e.g., a radiologist). Otherwise said, the results of annotation and segmentation of the medical images may change considerably from one medical operator to another one, according to their experience in the field and/or their expertise with the medical imagining technology.

Within this context, there is still a need for an improved method for measuring an anatomical target from a set of medical images representing the anatomical target.

### SUMMARY

It is therefore provided a computer-implemented method for measuring an anatomical target from a set of medical images representing the anatomical target, the method comprising:
- obtaining at least one medical image of the anatomical target;
- obtaining an annotation associated with the obtained at least one medical image of the anatomical target, the annotation comprising a measurement of the anatomical target;
- obtaining a trained model configured for outputting, based on the obtained annotation, a segmentation mask of the anatomical target represented on the obtained at least one medical image;
- applying the obtained trained model to the obtained at least one medical image and the obtained annotation, thereby identifying a segmentation mask of the anatomical target represented on the obtained at least one medical image; and
- computing a measurement of the anatomical target on the identified segmentation mask.

The method may comprise one or more of the following features:
- preprocessing the obtained at least one image and/or the obtained annotation;
- the preprocessing the obtained at least one image comprises cropping the obtained at least one image;
- the preprocessing the obtained annotation comprises adding a blur filter to the obtained annotation, preferably the added blur filter being a Gaussian blur filter;
- the obtained annotation comprises a manual annotation and/or automatic annotation;
- the obtained annotation comprises a measurement of the anatomical target, preferably the measurement being a linear measurement;
- the obtained annotation comprises a measurement of the anatomical target of a different type of the computed measurement of the anatomical target on the identified segmentation mask;
- the obtained annotation comprises a measurement of the anatomical target of the same type of the computed measurement of the anatomical target on the identified segmentation mask;
- the computed measurement of the anatomical target on the identified segmentation mask is an auto-correction measurement of the obtained annotation;
- applying the obtained trained model to the set of medical images and the obtained annotation, thereby identifying a set of segmentation masks of the anatomical target represented on the set of medical images;
- selecting a segmentation mask from the set of identified segmentation masks on which the computed measurement of the anatomical target is a measurement of interest; and/or
- the measurement of interest comprises physical and/or geometrical measurements of the anatomical target.

It is further provided a computer program comprising instructions which, when the program is executed by a computer, cause the computer to perform the method.

It is further provided a computer readable storage medium having recorded thereon the computer program.

It is further provided a system comprising a processor coupled to a memory, the memory having recorded thereon the computer program.

### BRIEF DESCRIPTION OF THE DRAWINGS

Non-limiting examples will now be described in reference to the accompanying drawings, where:
- FIG. 1 shows a flowchart of an example of the method;
- FIG.s 2 to 4 illustrate the method; and
- FIG. 5 shows an example of the system.

### DETAILED DESCRIPTION

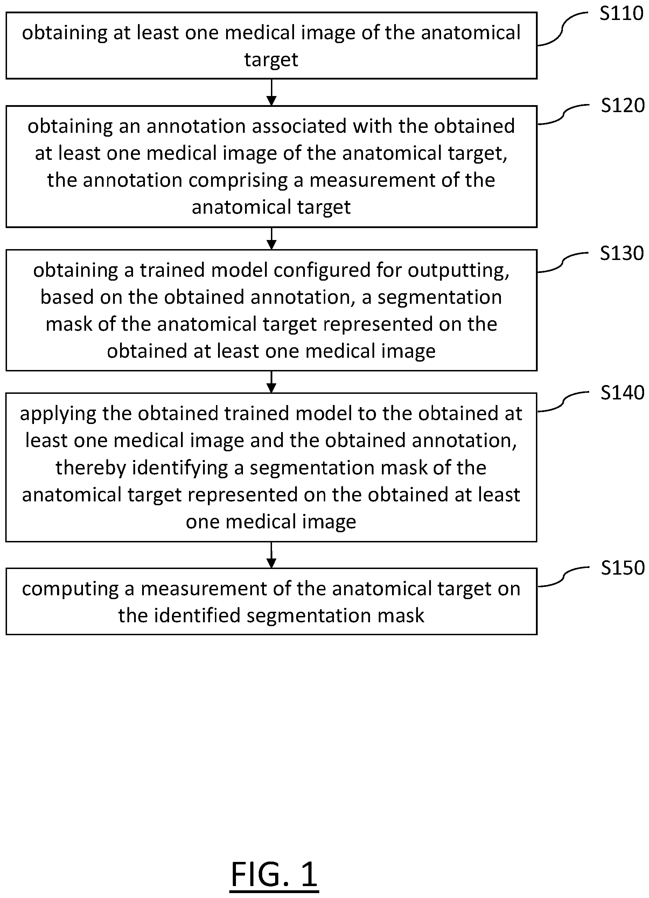

With reference to the flowchart of FIG. 1, it is proposed a computer-implemented method for measuring an anatomical target from a set of medical images representing the anatomical target.

The method comprises obtaining at least one medical image of the anatomical target.

The method also comprises obtaining an annotation associated with the obtained at least one medical image of the anatomical target. The annotation comprises a measurement of the anatomical target.

The method further comprises obtaining a trained model configured for outputting, based on the obtained annotation, a segmentation mask of the anatomical target represented on the obtained at least one medical image. The trained model may be a neural network trained or configured for image segmentations. The neural network may comprise deep learning models, such as U-net or Swin-Unetr models.

The method comprises applying the obtained trained model to the obtained at least one medical image and the obtained annotation. Thereby, the method identifies a segmentation mask of the anatomical target represented on the obtained at least one medical image.

The method comprises computing a measurement of the anatomical target on the identified segmentation mask.

Such a method improves the measurement of an anatomical target from a set of medical images representing the anatomical target.

Notably, the method amounts to compute semi-automatically measurements of an anatomical target from a set of medical images by leveraging previously performed annotation comprising measurements (e.g., linear measurements) of the anatomical target. This is achieved by identifying (e.g., by inferring) a segmentation mask of the anatomical target and then computing the measurement of the anatomical target on the identified segmentation mask. Otherwise said, the method of the present disclosure leverages a previous measurement of an anatomical target as a spatial indication (i.e., a suggestion) to guide the segmentation step performed by the obtained trained model. In yet other words, the method features an automatically approach that enables to achieve a more accurate segmentation and a more precise measurement of the anatomical target in comparison to other solutions known in the art.

The method also significantly reduces the inter-observer variability (i.e., the variability observed by different operators performing the same measure) and intra-observer variability (i.e., the variability observed by the same operator performing the same measure, possibly at different times) associated with the measurement of an anatomical target. In other words, the method aims at assisting the assessment of the measurement of an anatomical target by suggesting a (automatically) computed measurement of the anatomical target.

The method, moreover, by improving the quality of the measurement and the reproducibility of the measurement of an anatomical target, may be fully integrated in existing pipelines and workflows of clinicians and medical practitioners. The method may also be integrated in specific software for medical imaging annotation and measurements. Indeed, the method is fast to apply and easy to learn by clinicians and medical practitioners, thereby simplifying the clinical and medical practices.

The set of medical images may be obtained by any type of medical imaging, for example but not limited to, CT scans, MR scans, X-Rays,.... The medical imaging acquisition may be a 2D or 3D medical image as well as a 2D or 3D medical video. The method may obtain at least one 3D or video acquisition of the anatomical target; in this case, for example, the method may help the expert annotator (e.g., a radiologist or a medical practitioner) to measure the quantity of interest.

The obtained annotation, associated with the obtained at least one medical image of the anatomical target, comprises a measurement of the anatomical target. Preferably, the measurement of the anatomical target may be a linear measurement.

A measurement of an anatomical target may comprise quantifying dimensions and characteristics of the anatomical target. A measurement may be a linear measurement, e.g., the length between two points in a tumor or organ's lesion, a diameter of a structure or region of interest important for assessing pathological conditions. A measurement may also be an area measuring the size of a 2D surface for evaluating cross-sectional areas of organs or vessels. A measurement may also be a volume measuring the size of a 3D structure for quantifying the size of organs or tumors.

The obtained annotation may comprise a manual annotation and/or an automatic annotation. The same method (manual or automatic) for annotating the obtained medical images of the anatomical target is generally used when a set of manual annotations may be performed by means of a haptic device such as a mouse, a digital pencil, a touch screen; the user (that may be also referred to expert annotator) may draw/note the annotation directly on the medical image that is presented to him. An automatic annotation may be performed by means of a dedicated software for medical imaging annotation. The automatic annotation accelerates the annotation process in case the manual annotation is significantly time consuming. The software analyses the medical image and add the annotation to the medical image; the annotation may be directly stored with the (computer-readable) file containing the data of the medical image, or alternatively, the annotation may be stored in a (computer-readable) file distinct of the file containing the data of the medical image. The respective 2D annotation may comprise, at the same time, a manual and automatic annotation. For example, the user may annotate manually by means of a haptic device by indicating two points on the medical image and then a dedicated software may automatically draw the line passing through the two points and assigning a length value.

The obtained annotation may be a spatial annotation to localize and identify a target to be segmented. The obtained annotation may also comprise a bounding volume for drawing an enclosing shape around an area of interest such as tumors, lesions, organs to indicate their locations; the bounding volume may be a bounding box for drawing a quadrilateral, such as a rectangle, a square, a parallelogram, around the area of interest. The obtained annotation may further comprise masks for pixel-level annotations outlining shapes and borders of the anatomical target, key points for indicating anatomical landmarks on the anatomical target, and/or arrows pointing to an area of interest of the anatomical target.

The obtained trained model may be configured to generate (i.e., to output) a segmentation mask from the obtained at least one medical image of the anatomical target and the respective (i.e., associated) obtained annotation comprising a measurement of the anatomical target. Preferably, the obtained trained model may take into account (e.g., as input) the spatial guidance comprised in the inputted obtained annotation (e.g., a linear measurement). The spatial guidance may comprise spatial relationships of elements in the inputted annotations, such as relations between annotated points, annotated lengths or annotated areas in the inputted obtained annotation. Thus, the inputted annotation may coarsely indicate and localize an area of interest of the anatomical target to be segmented. Once the area of interest is localized, the obtained trained model is applied to identify a segmentation mask. The inputted annotation, therefore, simplifies the task the model has to learn (during the training phase) or to perform (during the inference phase), improves the segmentation quality and reduces the computation burden of the segmentation process. Furthermore, supplying the inputted obtained annotation to the trained model (e.g., a neural network) gives it implicitly additional information that may be captured during the training phase, such as the size of the area of interest or the classification of pixels belonging to the area of interest because spatially close to the obtained annotation.

In other words, the obtained trained model may use the spatial guidance from the inputted obtained annotation (e.g., manual annotation) to improve the accuracy of the generated segmentation mask. For example, in case the inputted manual annotation is a diameter of the anatomical target, the obtained trained model may use the spatial guidance of the inputted manual annotation, e.g., the length between two points represented by the manually annotated diameter, to predict the longest diameter of the anatomical target. This may increase the precision of the output of the obtained trained model. In other words, the obtained trained model may take as input the obtained at least one medical image of the anatomical target and the obtained annotation associated with the obtained at least one medical image of the anatomical target. The obtained trained model thus outputs a segmentation mask of the anatomical target represented on the obtained at least one medical image. The obtained trained model may use a deep neural network having an architecture enabling medical imaging segmentation. The deep neural network may have been previously trained to generate a segmentation mask of the anatomical target.

The applying of the obtained model outputs a segmentation mask of the anatomical target. A segmentation mask may highlight (e.g., in colors) specific regions of interest within the original medical image. The segmentation mask may delineate anatomical structures, tissues, or pathological areas, such as organs or tumors. Thus, the applying of the obtained model to the obtained at least one medical image and the obtained annotation (i.e., the two inputs of the model) identifies a segmentation mask of the anatomical target.

The method comprises computing a measurement of the anatomical target of said identified segmentation mask. The computed measure is automatically computed based on the identified segmentation mask and on the obtained at least one medical image and the respective obtained annotation. The computing may be performed using an algorithm or computations adapted to the measurements of interest to be performed (e.g., a linear measurement, an area, a volume). For example, the longest diameter of a region of interest in the anatomical target may be computed by searching for the most distant points belonging to the at least one target of interest according to the identified segmentation mask.

Once obtained, the automatically computed measurement of interest may be displayed to a user such as an expert annotator, e.g. on a computer display. For example, a medical annotation software may display the automatically computed measurement of interest; such as software may allow the expert annotator to promptly validate or invalidate the automatically computed measurement of interest.

The computed measurement may be of the same type of the obtained annotation, e.g., both may be the longest diameter of the anatomical target. In this case, the computed measurement of the anatomical target on the identified segmentation mask may be an auto-correction measurement of the obtained annotation. The method, therefore, may suggest a correction to the obtained annotation (comprising, e.g., a manual annotation), thus improving the precision of the measurement and reducing the variability of the measurement.

The computed measurement may be of a different type of the obtained annotation. In this case, for example, the obtained notation may be the longest diameter of the anatomical target (or, e.g., any region of interest of the anatomical structure) and the computed measurement may be the area or the volume of the anatomical target (or, e.g., any region of interest of the anatomical structure).

The method may further comprise preprocessing the obtained at least one image and/or the obtained annotation. The preprocessing of the obtained at least one image may comprise cropping the obtained at least one image. The preprocessing of the obtained annotation may comprise adding a blur filter to the obtained, preferably the blur filter may be a Gaussian blur filter. Preprocessing techniques may also comprise techniques such as windowing, background removal from the region of interest, denoising and/or resampling to prepare the obtained annotation for the method. Preprocessing techniques make it easier to identify and annotate regions of interest in the anatomical target. Notably, adding a blur filter on the obtained annotation reduces the sensitivity of the method to very small variations of the inputted annotation (e.g., a spatial, linear measurement), and diffuses the information regarding the relative position of the pixels to the inputted annotation.

The obtained annotation may comprise a measurement of the anatomical target of a different type or may comprise a measurement of the anatomical target of a same type of the computed measurement of the anatomical target on the identified segmentation mask. In both cases, the method may further comprise applying the obtained trained model to the set of medical images and the (e.g., respective) obtained annotation. This way, the method may identify a set of segmentation masks of the anatomical target represented on the set of medical images.

In an example of implementation, the method may be applied to each medical image (i.e., 2D image-wise) of the set of medical images and the obtained annotation, thereby identifying a set of segmentation masks, each segmentation mask corresponding to a respective medical image.

In another example of implementation, the method may be applied to the set of medical images and the obtained annotation, each medical image being a 2D slice of a 3D image representing the anatomical target, thereby identifying a set of segmentation masks of the anatomical target represented on the set of medical images. In this other example of implementation, the set of medical images belongs to the same 3D image, being 2D sections of the same 3D image. The method, thus, enables to perform 3D-aware measurements of a region of interest, such as volume estimation and measurement of a maximum intensity. In other words, the method may provide a 3D spatial resolved segmentation mask of the anatomical target that may help improve visualization of complex shapes, spatial relationships and enable volume measurements.

The method may further comprise selecting a segmentation mask from the set of identified segmentation masks on which the computed measurement of the anatomical target is a measurement of interest. In other words, the method may provide help to the expert annotator to select at least one medical image on which the computed measurement of the anatomical target is a measurement of interest. The measurement of interest may comprise physical and/or geometrical measurements of the anatomical target. For example, a physical measurement may comprise density (e.g., in CT scans) of tissues to identify types of tissues and/or pathological changes. For example, a geometrical measurement may comprise at least one of a size, a distance, an angle, an area, a volume of the anatomical target.

An example of implementation of the method is now discussed.

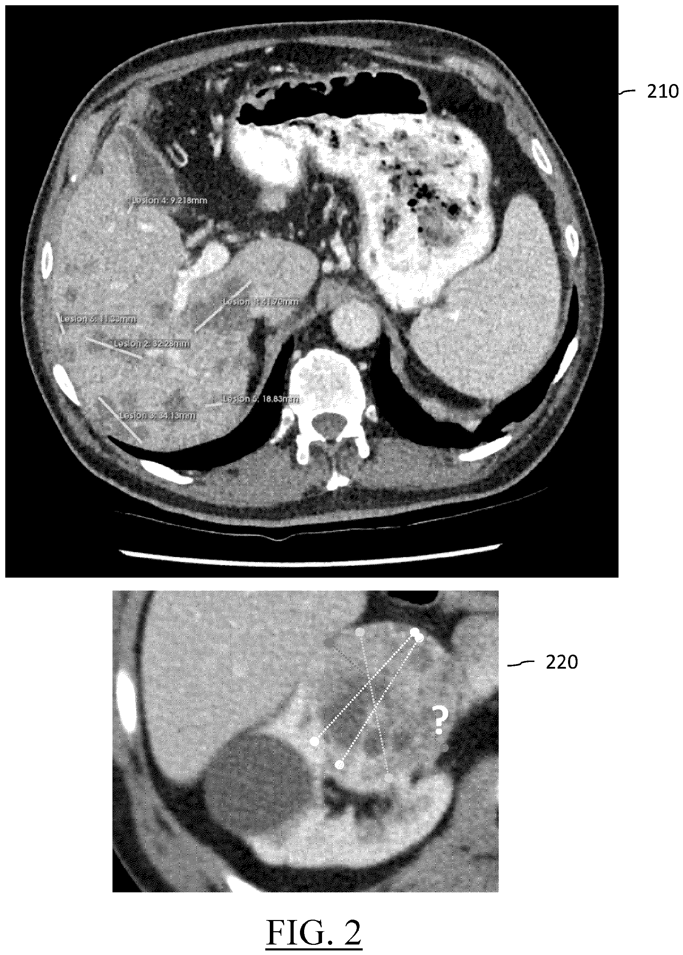

With referent to FIG. 2, it is shown a medical image 210 obtained by a CT scanning technology. The medical image is annotated with several labels ("Lesion 1", "Lesion 2", ...), each annotation comprising a measurement (e.g., a length) of the respective lesion. The expert annotator may want to measure the longest diameter of the region of interest 220 of the anatomical target. In the example of FIG. 2, the measurement of a lesion is a distance between two points of the lesion, e.g. the two farthest points belonging to the lesion. The measurement of each lesion is materialized by an arrow together with a number that represent the measured distance between the two points of the lesion. For example, the distance measured between the two farthest points of the lesion 4 is 9.218 mm.

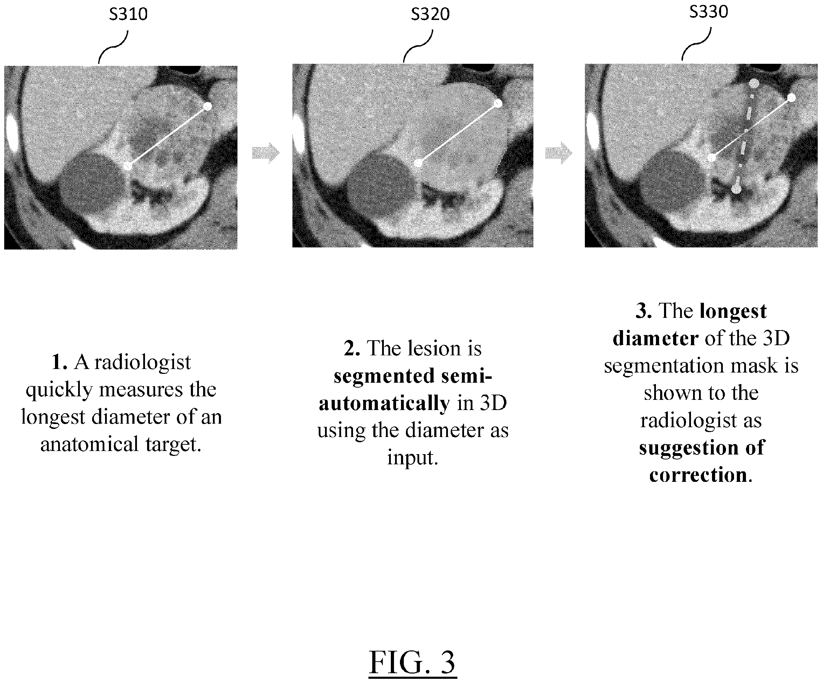

With reference to FIG. 3, it is shown an example of pipeline of the method of the present disclosure. At S310, the expert annotator may perform at least one manual annotation comprising a measurement of the anatomical target. The manual annotation may be performed by means of a haptic device (e.g., a mouse, a digital pencil, a touch screen); for example, the expert annotator selects what he/she considers as the two farthest points belonging to the lesion by use of the haptic device. The performing of the at least one manual annotation may be done with the use of a dedicated software for medical imaging annotation.

The obtained at least one medical image of the anatomical target and the obtained annotation (performed by the expert annotator) associated with the obtained at least one medical image of the anatomical target are then fed as input to the obtained trained model for outputting at S320, based on the obtained annotation (i.e., using the spatial guidance of the obtained annotation), a segmentation mask of the anatomical target represented on the obtained at least one medical image.

Then, the method comprises computing S330 a measurement of the anatomical target on the identified segmentation mask. In this example of implementation, the obtained annotation comprises a measurement of the anatomical target of the same type of the computed measurement of the anatomical target on the identified segmentation mask. The computed measurement is shown to the expert annotation as an auto-correction measurement of the obtained annotation. For example, a medical annotation software may display the auto-correction measurement of the obtained annotation on a screen connected to a computer where the method is implemented. In other words, the computed measurement may be suggested as a correction to the obtained annotation performed by the expert annotation, either manually or automatically.

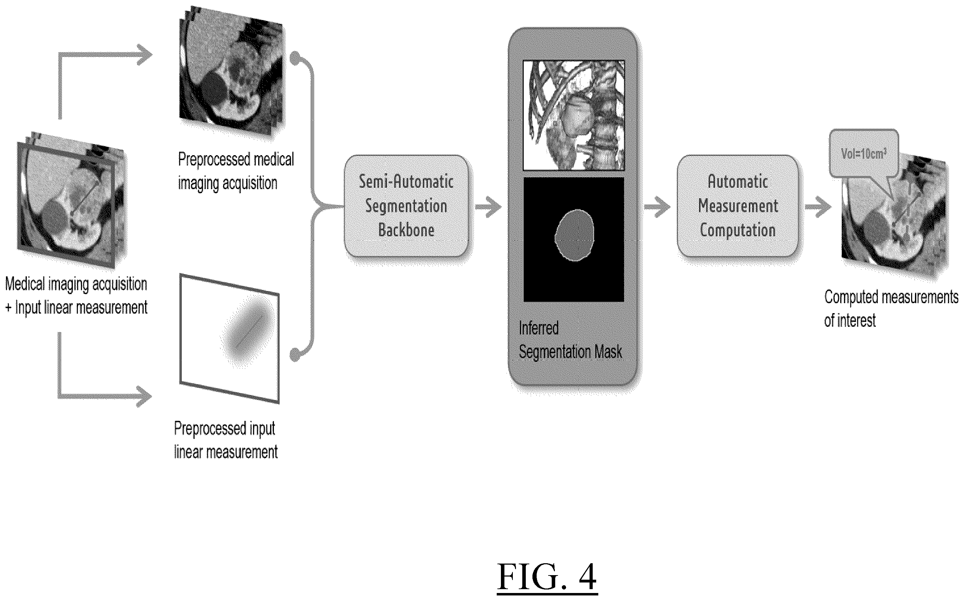

With reference to FIG. 4, it is shown an example of pipeline of the method of the present disclosure.

The method comprises obtaining at least one medical image of the anatomical target. The at least one medical image of the anatomical target may be preprocessed, e.g., by cropping the obtained at least one image. The method also comprises obtaining an annotation associated with the obtained at least one medical image of the anatomical target. The obtained annotation comprises a measurement of the anatomical target (e.g., a linear measurement). The method may comprise preprocessing the obtained annotation, e.g., by adding a Gaussian blur filter.

Both the preprocessed obtained at least one medical image of the anatomical target and the preprocessed obtained annotation may be fed as input to the obtained trained model for semi-automatic segmentation. The preprocessed obtained at least one medical image of the anatomical target and the preprocessed obtained annotation may be concatenated before being fed as input to the obtained trained model. Concatenation refers to the process of combining data (e.g., stored in multidimensional arrays) before being inputted in a trained model.

The obtained trained model is configured for outputting, based on the (preprocessed or not) obtained annotation, a segmentation mask of the anatomical target represented on the obtained at least one medical image. The obtained trained model may use a deep neural network having an architecture (e.g., U-Net or Swin-Unetr) enabling medical imaging segmentation. The deep neural network has been previously trained to generate a segmentation mask of the anatomical target. The training may comprise open-source pre-trained weights by self-supervised training obtained with a dataset for automatic segmentation.

The method further comprises computing a measurement (e.g., an automatic measurement) of the anatomical target on the identified segmentation mask.

The method may also display computed measurements of interest. In this example of implementation, the obtained annotation comprises a measurement of the anatomical target of a different type of the computed measurement of the anatomical target on the identified segmentation mask. Indeed, in this case, the obtained annotation is a linear measurement, whereas the computed measurements of interest comprise a measurement correction of the inputted linear measurement and the volume of the region of interest (in this case, 10 cm³) on which the obtained annotation has been taken.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

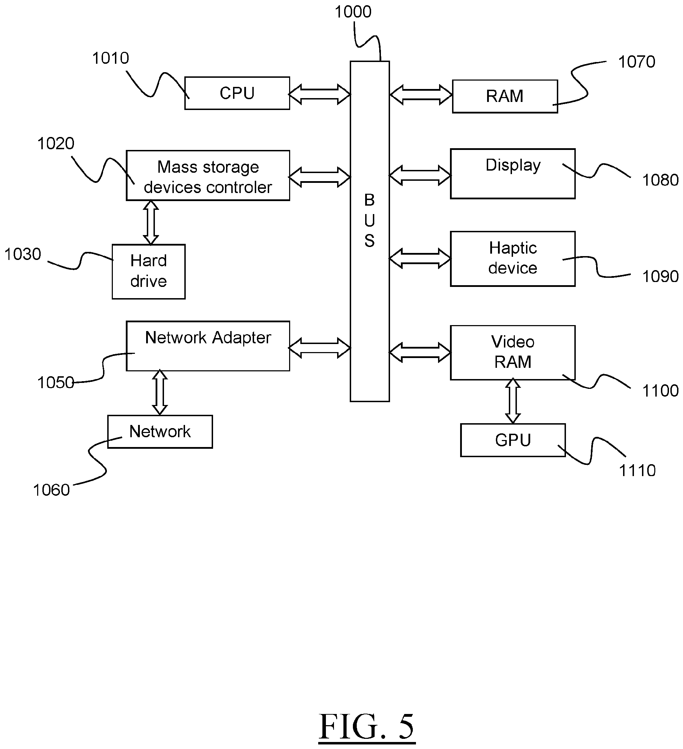

FIG. 5 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method for measuring an anatomical target from a set of medical images representing the anatomical target, the method comprising:
- obtaining at least one medical image of the anatomical target;
- obtaining an annotation associated with the obtained at least one medical image of the anatomical target, the annotation comprising a measurement of the anatomical target;
- obtaining a trained model configured for outputting, based on the obtained annotation, a segmentation mask of the anatomical target represented on the obtained at least one medical image;
- applying the obtained trained model to the obtained at least one medical image and the obtained annotation, thereby identifying a segmentation mask of the anatomical target represented on the obtained at least one medical image; and
- computing a measurement of the anatomical target on the identified segmentation mask.

2. The computer-implemented method of claim 1, further comprising preprocessing the obtained at least one image and/or the obtained annotation.

3. The computer-implemented method of claim 2, wherein the preprocessing the obtained at least one image comprises cropping the obtained at least one image.

4. The computer-implemented method of any one of claims 2 to 3, wherein the preprocessing the obtained annotation comprises adding a blur filter to the obtained annotation, preferably the added blur filter being a Gaussian blur filter.

5. The computer-implemented method of any one of claims 1 to 4, wherein the obtained annotation comprises a manual annotation and/or automatic annotation.

6. The computer-implemented method of any one of claims 1 to 5, wherein the obtained annotation comprises a measurement of the anatomical target, preferably the measurement being a linear measurement.

7. The computer-implemented method of any one of claims 1 to 6, wherein the obtained annotation comprises a measurement of the anatomical target of a different type of the computed measurement of the anatomical target on the identified segmentation mask.

8. The computer-implemented method of any one of claims 1 to 6, wherein the obtained annotation comprises a measurement of the anatomical target of the same type of the computed measurement of the anatomical target on the identified segmentation mask.

9. The computer-implemented method of claim 8, wherein the computed measurement of the anatomical target on the identified segmentation mask is an auto-correction measurement of the obtained annotation.

10. The computer-implemented method of any one of claims 1 to 6 combined with claim 7 or combined with claim 8 or 9, further comprising applying the obtained trained model to the set of medical images and the obtained annotation, thereby identifying a set of segmentation masks of the anatomical target represented on the set of medical images.

11. The computer-implemented method of claim 10, further comprising selecting a segmentation mask from the set of identified segmentation masks on which the computed measurement of the anatomical target is a measurement of interest.

12. The computer-implemented method of claim 11, wherein the measurement of interest comprises physical and/or geometrical measurements of the anatomical target.

13. A computer program product comprising instructions which, when the program is executed by a computer, cause the computer to perform the method of claims 1 to 12.

14. A computer readable storage medium having recorded thereon a computer program of claim 13.

15. A system comprising a processor coupled to a memory, the memory having recorded thereon the computer program of claim 13.
